# EUROPEAN PATENT APPLICATION

(11) **EP 4 187 118 A1**
(43) Date of publication of application: **31.05.2023**
(21) Application number: 21211479.7
(22) Date of filing: 30.11.2021
(51) Int. Cl.: F16D 51/32, F16D 55/226, F16D 65/66

(54) **METHOD AND DEVICE FOR WEAR COMPENSATION IN A BRAKING SYSTEM OF VEHICLES**

(71) Applicant: KNORR-BREMSE Systeme für Nutzfahrzeuge GmbH, 80809 München (DE)
(72) Inventor: KRÜGER, Sven Philip, 81476 München (DE); MEDERER, Martin, 92318 Neumarkt (DE); PESCHEL, Michael, 82296 Schöngeising (DE); KOKREHEL, Csaba, 1119 Budapest (HU); MONORI, Gyula, 6065 Lakitelek (UG); HÖS, Levente, 1047 Budapest (HU); STANKOVIC, Dordo, 81929 München (DE); GYÖRKE, Zsombor, 8360 Keszthely (HU); KLINGNER, Matthias, 82275 Emmering (DE); BLESSING, Michael, 80687 München (DE); SZABO, Janos, 1101 Budapest (HU); MLINARCSEK, Csaba, 1165 Budapest (HU); HOLLOSI, Mate, 1097 Budapest (HU); SCHALLER, Sebastian, 86462 Langweid (DE); FOJTYIK, Gabor, 2091 Etyek (HU); SCHÖFBERGER, Tobias, 84048 Mainburg (DE)
(74) Representative: Prüfer & Partner mbB Patentanwälte · Rechtsanwälte

(57) **Abstract**

In a method and a device for wear compensation in a braking system of vehicles, particularly commercial vehicles or utility vehicles, the braking system comprises a first brake (10) having a service braking function during driving of the vehicle and/or a fixing brake function and/or auxiliary brake functions, particularly boost and/or emergency brake functions; a second brake (20) having a fixing brake function and/or auxiliary brake functions, particularly boost and/or emergency brake functions, to support the function of the first brake; the first brake (10) and/or the second brake (20) each having first and second cooperating means (1; 12, 14; 22, 24) for effecting the brake function, said first and second cooperating means (1; 12, 14; 22, 24) particularly comprising friction means; and the method comprises the following steps: providing adjustment means (30; 40) for an adjustment of an actual clearance (C) between the respective first and second cooperating means (1; 22, 24) of the second brake (20); providing a value for a desired clearance (C) between the respective first and second cooperating means (1; 22, 24) of the second brake (20); and adjusting an actual clearance (C) between the respective first and second cooperating means (1; 22, 24) of the second brake (20) to said desired clearance value by said adjustment means (30; 40). The first cooperating friction means may comprise at least one brake pad (11, 12; 22, 24) and/or at least one brake shoe, and the second cooperating friction means may comprise at least one brake disk (1) and/or at least one brake drum.

## Description

The invention relates to a method and a device for wear compensation in a braking system of vehicles, particularly commercial vehicles or utility vehicles, and to a vehicle using such a method and/or such a device.

Utility vehicles or commercial vehicles typically are equipped with pneumatic and/or spring actuators to realize the function of a service brake, i.e. a regular braking function during driving of the vehicle, and the function of a fixing or parking brake. Thus, these functions are typically provided in a single brake device. Said pneumatic and/or spring actuators may be provided as combined cylinders and are mostly located on the rear axle of the vehicle. Brakes of this type use the same transmission mechanics and wear adjustment devices for both said brake functions.

Wear adjustment devices or wear adjusters are required and typically provided to adjust the concerned brake elements, e.g. particularly the cooperating means for effecting the actual brake function of friction brakes, such as brake pads cooperating with a brake disk or brake shoes cooperating with a brake drum, to compensate wear that has occurred on the concerned brake elements. Such wear may encompass a loss or removal of the material of which the brake elements consist, e.g. by friction and abrasion due to the use of the brake. By such material abrasion, the dimensions of the actual brake elements may change, so that an increasing wear may lead to an increased distance or clearance between a brake pad and a brake disk in their basic, non-active position. Thereby, certain travel distances may change for the moving brake elements to cooperate with each other to effect a braking with more or less strength as intended. Thus, it may be desired to reduce, i.e. compensate or adjust, said distance or clearance between a brake pad and a brake disk to enable a proper functioning of the brakes.

Besides, wear may be created by corrosion of the concerned brake elements which may e.g. occur in case that the brakes are used less often.

In both said cases, a higher wear typically leads to a deterioration of the brake and a decreased braking efficiency. In order to cope with and compensate such wear, brakes of vehicles in general, particularly of utility or commercial vehicles, typically have the above mentioned wear adjustment devices or wear adjusters, respectively.

In case that the vehicle friction brake e.g. comprises a brake pad acting on a brake disk, the wear adjuster can e.g. eventually act on the brake pad and can displace, e.g. advance or retract, same to compensate changed distances between the brake pad and the brake disk which are due to wear. Thereby, e.g., any material losses on the brake pad and/or the brake disk due to abrasion can be compensated or offset by said adjusted or adapted, changed distance or a changed clearance between the brake pad and the brake disk to maintain the required braking effect.

To accomplish the movement of the concerned brake elements over said distance, the wear adjuster is driven by drive means such as a lever. Typically, pneumatic and/or electrical actuators are used for said drive means. However, other kinds of actuators are also conceivable. The wear adjuster in turn drives advancement means such as one or more threaded tubes or shafts. The threaded tubes or shafts eventually act on one or more brake pads and displace them towards the brake disk such that, by turning the threaded tubes or shafts, wear of the brake pads and/or of the brake disk can be compensated. Typically, a wear sensor or wear sensing system is connected to the one or more threaded tubes or shafts and detects the sum of the wear of the brake pads and the brake disk.

Instead of using just one braking device as described above, it is an option to use a second brake device e.g. to reduce the axial length of a service brake (e.g. the above mentioned first brake) at chosen vehicle wheels and in order to realize a fixing or parking brake function and/or boost and/or emergency and/or auxiliary brake functions to support the function of the service brake (first brake). With a second brake, additional brake torque potential is provided. A boost function of the brake is realized substantially in the same way as an emergency function or an auxiliary function of the brake. However, it may depend on the specific use case and a brake torque distribution between service brake (first brake) and second brake. If such second brake devices are used, wear adjustment devices or wear adjusters, respectively, are needed for these second brakes.

Due to the fact that the second brake with its fixing brake function and/or the other above mentioned functions typically is activated less often than the first/service brake, a mechanical wear adjustment of the second brake could be too slow or insufficient and/or might not respond or act properly or adequately. Such an improper and/or too slow wear adjustment of the second brake could therefore, amongst others, lead to a lower clamping force to hold the vehicle in standstill or to less performance in case of boost and/or emergency and/or auxiliary brake functions.

Further applications in which a second brake is provided having a fixing brake function are known from the passenger vehicle sector. Here, for example, the brake is designed with a clamping mechanism comprising a thread or a similar means, wherein the thread is used to clamp the brake and for adjusting and/or compensating the wear. Herein, higher transmission ratios than in the first or service brakes are allowed, because longer actuation times are acceptable for the fixing brake function. With this kind of clamping mechanism, a separate adjuster drive is not needed.

Thus, it is an object of the invention to overcome the above discussed problems and to realize an adjustment or setting of a constant clearance or distance between cooperating friction means of a second friction brake, such as between one or more brake pads and a brake disk or between one or more brake shoes and a brake drum, said second friction brake having a fixing or parking brake function and/or boost and/or emergency and/or auxiliary brake functions, to ensure an optimal performance of said second brake.

According to the present invention, this object is achieved by a method for wear compensation in a braking system of vehicles, particularly commercial vehicles or utility vehicles, as defined by claim 1, by a device for wear compensation in a braking system of vehicles as defined by claim 17, and by a vehicle, particularly a utility vehicle or commercial vehicle, as defined by claim 18.

Thus, the invention provides a method for wear compensation in a braking system of vehicles, particularly commercial vehicles or utility vehicles, wherein the braking system comprises a first brake having a service braking function during driving of the vehicle and/or a fixing brake function and/or auxiliary brake functions, particularly boost and/or emergency brake functions; a second brake having a fixing brake function and/or auxiliary brake functions, particularly boost and/or emergency brake functions, to support the function of the first brake; the first brake and/or the second brake each having first and second cooperating means for effecting the brake function, said first and second cooperating means particularly comprising cooperating friction means. The method of the invention is characterized by the following steps:
- providing adjustment means for an adjustment of an actual clearance between the respective first and second cooperating means of the second brake;
- providing a value for a desired clearance between the respective first and second cooperating means of the second brake; and
- adjusting an actual clearance between the respective first and second cooperating means of the second brake to said desired clearance value by said adjustment means.

The invention also provides a device for wear compensation in a braking system of vehicles, particularly commercial vehicles or utility vehicles, wherein the device uses a method for wear compensation as described above and in the following description.

In a preferred embodiment of the method and the device of the invention, the first cooperating friction means comprises at least one brake pad and/or at least one brake shoe, and the second cooperating friction means comprises at least one brake disk and/or at least one brake drum.

Adjustment means for an adjustment of an actual clearance between the respective first and second cooperating means can also be provided in the first brake. It is to be noted that the clearance adjustment means of the second brake, which are provided according to the invention, are separate from and independent of any such clearance adjustment means of the first brake.

Thus, the invention relates to a method and a device for adjusting the clearance of a second brake to a desired clearance or target clearance, wherein the proposed solutions can relate to friction brakes, particularly a disk brake or a drum brake, or to any other kind of brake.

In a first general embodiment of the invention, the clearance adjustment at the second brake can be carried out by using a basically mechanical adjuster in the second brake.

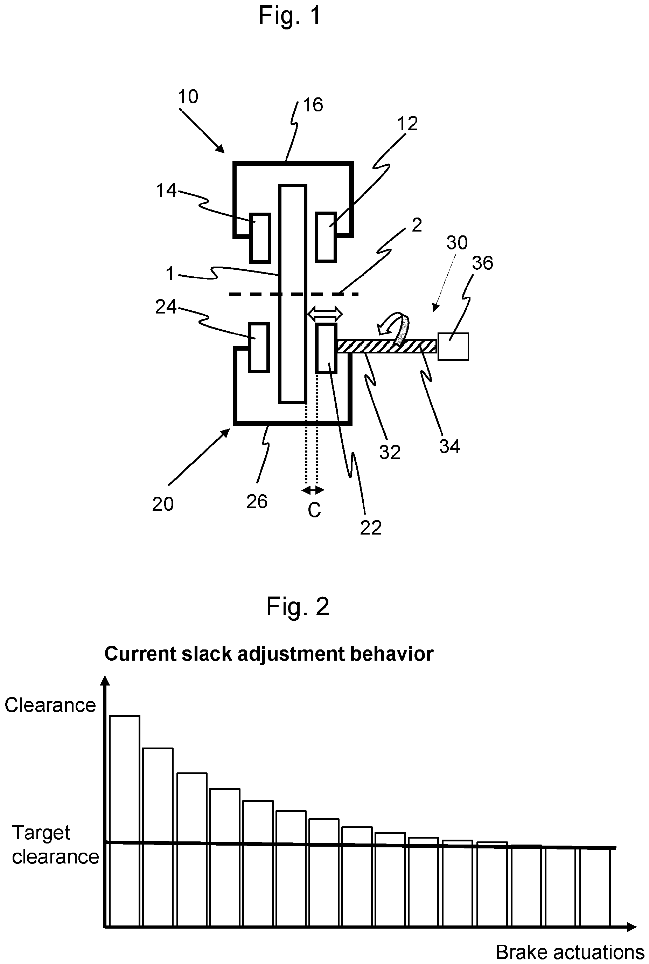

Therein, a compensation of wear and/or a too high clearance at the friction brake elements of the second brake can be achieved by a repetitive actuation of the brake. If the clearance is the highest prior to actuating the brake for the first time in a respective repetition cycle, then the clearance decreases successively with every further brake actuation, thereby approaching a desired or target value of the clearance, i.e. eventually reaching a constant value of the clearance size, where any further brake actuation then does no longer reduce the clearance. This adjustment behavior is shown in Fig. 2.

This process of a repetitive actuation of the second brake involves the following steps:
- applying the first brake (service brake) to hold the vehicle (preferably automatically) in standstill;
- (preferably automatically) actuating and releasing the second brake one or several times (active additional actuation(s)) to compensate wear at the first and/or second cooperating means of the second brake;
- actuating the second brake to hold the vehicle stationary;
- releasing the first brake (service brake).

Prior to starting this repetition process, a fixing brake control element, which is provided in the braking system, may be actuated by the driver meaning to park, i.e. to hold the vehicle.

A compensation of wear and/or a too high clearance at the friction brake elements of the second brake can also be achieved by a faster actuation of the second brake by using other transmission dimensions.

In this case, the adjustment means for an adjustment of an actual clearance between the respective first and second cooperating means of the second brake comprise advancement means cooperating with the first and/or second cooperating means of the second brake, wherein wear at the first and/or second cooperating means can be compensated by advancing and/or retracting said advancement means; at least one wear adjuster driving the advancement means; and drive means driving the at least one wear adjuster.

In a preferred embodiment, said advancement means may comprise at least one threaded tube or shaft, and/or said drive means may comprise at least one lever and/or at least one gear wheel. The lever may be provided for actuating the second brake, in particular by a translationally acting device, for example a pneumatic cylinder. Other suitable means are likewise conceivable in this respect.

Thus, in the latter embodiment that said advancement means comprise at least one threaded tube or shaft, and that said drive means comprise at least one lever and/or at least one gear wheel, the above generally described method of the invention translates into the following specific method, wherein the adjustment means for an adjustment of an actual clearance between the respective first and second cooperating means of the second brake comprise: at least one threaded tube or shaft cooperating with the first and/or second cooperating means of the second brake, wherein wear at the first and/or second cooperating means can be compensated by turning the at least one threaded tube or shaft; at least one wear adjuster driving the at least one threaded tube or shaft; and at least one lever and/or at least one gear wheel driving the at least one wear adjuster.

In case that the latter specific advancement means and drive means are provided, the method may comprise the following steps:
- providing the drive means such that it comprises at least one lever, wherein the lever comprises engagement elements, particularly pins which may particularly form a fork,
- driving the at least one wear adjuster, wherein the wear adjuster comprises engagement elements, particularly pins,
- wherein an adjustment of an actual clearance between the respective first and second cooperating means of the second brake occurs when said engagement elements of the wear adjuster contact or engage with said engagement elements of the lever.

In this case, for example, the lever may comprise two additional pins forming a lever fork. The lever may be operated by a brake cylinder. The wear adjuster may comprise two or three pins. At each brake actuation the pins of the lever and of the wear adjuster will get in contact. Herein, two cases are to be distinguished: If the clearance between the respective first and second cooperating means (e.g. brake disk and brake pads) of the second brake is correct, then the pins get in contact at the same time as the brake pads and the brake disk. Thereby, the wear adjuster is blocked, and an overload clutch in the wear adjuster opens to avoid damages. In the other case that the clearance between the respective first and second cooperating means (e.g. brake disk and brake pads) is too big, the pins get in contact before the brake pads and the brake disk are in contact. Hereby, the wear adjuster is not blocked, and an adjustment occurs. The length of the pins defines the transmission ratio which generally is a constant ratio, i.e. generally not a variable ratio.

Alternatively or additionally, the method may comprise the following step:
- providing the advancement means such that it comprises at least one threaded tube or shaft, wherein the at least one threaded tube or shaft comprises a thread pitch.

As mentioned above, the transmission ratio and/or the ratios or characteristics of the components (e.g. drive means and/or wear adjuster and/or advancement means) of the second brake as such generally have a constant value. Likewise, the respective transmission ratios or characteristics of the components (e.g. drive means and/or wear adjuster and/or advancement means) of the first brake as such generally have a constant value. Typically, these ratio values of the first brake distinguish from the respective ratio values of the second brake, e.g. the second brake may have higher or lower transmission ratios than the first brake. Accordingly, a compensation of wear or of a too high clearance at the concerned brake components of the second brake can also be achieved by a faster adjustment of the second brake by using other transmission dimensions as compared to the first brake. Thus, while the transmission ratio of the first brake as such is not changed, the magnitudes or values of the concerned ratios of the components of the first brake may be modified to obtain the respective magnitudes or values of the ratios of the components of the second brake.

Accordingly, in the above mentioned embodiment that said advancement means may comprise at least one threaded tube or shaft, and that said drive means comprise at least one lever and/or at least one gear wheel, it is conceivable to modify the ratio between the lever and the adjuster in a case where the second brake substantially has the same components and/or inner mechanics as the first brake in order to make the adjustment faster within each actuation of the second brake. Relevant is here the ratio of the lever fork lengths. It is also conceivable to use a higher thread pitch at the threaded tubes to realize a faster adjustment.

The precedingly said may particularly apply in a case where the second brake e.g. is a parking brake and the first brake is a service brake. The parking brake is typically activated less often as compared to the service brake. Typically, the parking brake is only used in standstill. The brake disk is used both for the second brake and for the first brake. Accordingly, the disk wear needs to be compensated also at the second brake. Thus, due to the fewer activations of the second brake, a faster adjustment of the second brake and thus a faster wear compensation, particularly of the brake disk, by the wear adjuster may be useful or required.

It is to be understood that the above discussed advancement means and drive means and the respective transmission ratios or characteristics are meant just as examples and that instead other suitable means, ratios and characteristics are likewise conceivable.

Instead of or additionally to achieving a faster actuation of the second brake by using other transmission dimensions, as explained above, a faster actuation may also be achieved with other and/or additional transmission parts. For example, in addition or alternatively to said lever forks, the transmission could be designed with gear wheels. This may allow a higher transmission ratio. An additional idle wheel could also increase this ratio.

In a second general embodiment of the invention, which can be provided instead of or in addition to the above described first general embodiment of the invention, the clearance adjustment at the second brake can be carried out in that the adjustment means for an adjustment of an actual clearance between the respective first and second cooperating means of the second brake comprise an electric motor and/or a motor encoder associated with the electric motor as an adjuster drive. This electric motor may be a motor which is provided in the second brake for effecting the clamping effect of the second brake, e.g. to effect a fixing brake function. Thus, in addition to said clamping effect, this electric motor may work as a clearance adjuster or adjuster drive, respectively, and additionally, in a further specific embodiment of the invention, also as a wear sensor, as will be explained below.

As a first option for this second general embodiment, the clearance adjustment at the second brake can be carried out according to a wear sensing system in the second brake and particularly with the following method steps:
- providing a wear sensing system in the first brake to detect the amount of wear of the first and/or second cooperating means for effecting the brake function of the first brake; and/or
- providing a wear sensing system in the second brake to detect the amount of wear of the first and/or second cooperating means for effecting the brake function of the second brake;
- based on the information obtained from the wear sensing system in the second brake and/or the wear sensing system in the first brake, determining the point in time and the amount of wear of the second brake which needs to be compensated by the clearance adjustment means (adjuster drive) of the second brake.

Accordingly, by integrating a separate wear sensing system in the second brake, in addition to the wear sensing system in the first brake (service brake), the information from this additional wear sensing system in the second brake (and/or possibly also from the wear sensing system in the first brake) can be used to learn and to know when and how much brake wear needs to be compensated in the second brake by the (preferably automatic) clearance adjustment mechanism (adjuster drive).

As mentioned above, in the case of friction brakes, the first cooperating friction means may comprise at least one brake pad and/or at least one brake shoe, and the second cooperating friction means may comprise at least one brake disk (cooperating with brake pads) or at least one brake drum (cooperating with brake shoes).

Thus, as a further aspect of the above mentioned first option of the second general embodiment, the case is considered that the second brake has only a fixing brake function, wherein the first and second cooperating means for effecting the brake function of the first brake and/or the second brake comprise at least one, particularly two, first cooperating friction means (e.g. brake pads) and at least one second, preferably common, cooperating friction means (e.g. brake disk).

In this case, the method for a clearance adjustment at the second brake comprises the following steps:
- measuring substantially the total wear of the braking system, particularly the sum of the wear of the at least one, particularly two, first cooperating friction means (e.g. two brake pads) plus the wear of the at least one second cooperating friction means (e.g. brake disk) of the first brake, by the wear sensing system of the first brake; and/or
- measuring the wear of the second cooperating friction means (e.g. brake disk) of the second brake by the wear sensing system of the second brake; and/or
- calculating the total wear of the at least one, particularly two, first cooperating friction means (e.g. two brake pads) of the first brake, based on the measuring of the wear of the second cooperating friction means (e.g. brake disk) of the second brake and on the measuring of the total wear by the wear sensing system of the first brake.

Thus, in the above case that the second brake has only a fixing brake function, the following applies for a friction brake having brake pads and a brake disk:
- The wear of the first brake (service brake) equals the total wear (2x brake pads plus brake disk), as the wear sensing system of the first brake measures mainly the total wear.
- The wear of the second brake (fixing brake) equals the wear of the brake disk, because, when the second brake is used as a fixing brake, there is no wear of its brake pads and a direct measurement of the wear of the brake disk is possible by using the second brake wear sensing system.
- By having measured the wear of the brake disk over the second brake wear sensing system and knowing the total wear provided by the first brake wear sensing system, a calculation of the total wear of the brake pads (2x brake pads) of the first brake is possible.

In a second option for the above described second general embodiment of the invention, which comprises an electric motor and/or a motor encoder associated with the electric motor as an adjuster drive, and again under the exemplifying assumption of using friction brakes (in which the first cooperating friction means comprise at least one brake pad and the second cooperating friction means comprise at least one brake disk), the clearance adjustment at the second brake can be carried out according to a wear sensing system in the first brake (service brake) and particularly with the following method steps:
- providing a wear sensing system in the first brake to detect the amount of wear of the first and/or second cooperating friction means for effecting the brake function of the first brake;
- based on the information obtained from the wear sensing system in the first brake, and/or based on determining that the total wear, particularly the sum of the wear of the first cooperating friction means plus the wear of the second cooperating friction means (e.g. wear of the brake pads plus wear of the brake disk), is approximately proportional to the wear of the second cooperating friction means (e.g. wear of the brake disk), determining the amount of wear of the second brake which needs to be compensated by the clearance adjustment means of the second brake.

Accordingly, the wear sensing system in the first brake can also give an indication of how much adjustment at the second brake is needed. This is possible because the total wear (wear of brake pads and brake disk) is approximately proportional to the wear of the brake disk. This particularly applies in a case where the second brake e.g. is a parking brake and the first brake is a service brake. The parking brake is typically activated less often as compared to the service brake. There is substantially no wear of the brake pads of the parking brake. As the first brake and the second brake use the same brake disk, based on a wear of the brake pads and the brake disk of the first brake, it can be determined how much adjustment is required at the second brake, particularly because the wear of the brake pads of the second brake (parking brake) is Zero.

The relationship between the wear of the brake pads and the wear of the brake disk depends mainly on the friction materials used on the brake disk and/or brake pads as well as on the type of the concerned vehicle, particularly utility or commercial vehicle (e.g. long haul vehicle, distribution vehicle, etc.). These items are typically known.

In a third option for the above described second general embodiment of the invention, which comprises an electric motor and/or a motor encoder associated with the electric motor as an adjuster drive, and again under the exemplifying assumption of using friction brakes (in which the first cooperating friction means comprise at least one brake pad and the second cooperating friction means comprise at least one brake disk), the clearance adjustment at the second brake can be carried out without a wear sensing system and particularly with the following method step:
- adjusting an actual clearance between the respective first and second cooperating means of the second brake to the desired clearance value in predefined time intervals and/or by a predefined number of actuations of the first brake and/or by predefined strengths of actuations of the first brake and/or by a predefined duration of actuations of the first brake.

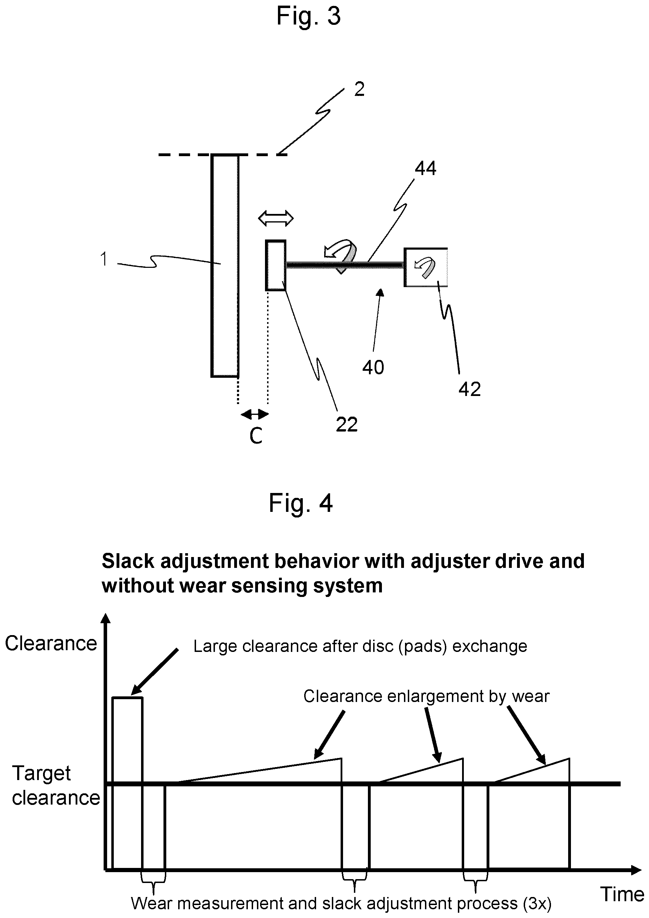

Accordingly, clearance adjustments (particularly so-called slack adjustments) will only be done in predefined time intervals, by a predefined number of actuations of the first brake (service brake), by predefined actuation strengths of the first brake (service brake), and/or by a predefined duration of actuations of the first brake. Fig. 4 shows a so-called slack adjustment behavior with an adjuster drive and without a wear sensing system, wherein particularly adjustments are made in predefined time intervals.

For this purpose, the adjuster drive (electric motor and/or motor encoder associated with the electric motor) will be used not only for wear adjustment purposes, but also as a sensing system to detect the current wear of the brake disk, or the total wear in the case when the second brake is used as an auxiliary brake. Accordingly, the method for clearance adjustment comprises the following steps:
- adjusting the actual clearance between the at least one first cooperating friction means (e.g. brake pad) and the at least one second cooperating friction means (e.g. brake disk) of the second brake by the adjuster drive (i.e. using the adjuster drive for wear adjustment purposes);
- using the adjuster drive as a wear sensing system to detect the current wear of the at least one second cooperating friction means (e.g. brake disk); and/or,
- if the second brake is used as an auxiliary brake, using the adjuster drive as a wear sensing system to detect the total wear of the second brake.

To realize the preceding method steps, the following method steps of the adjuster means are necessary:
- driving the at least one first cooperating friction means (e.g. brake pad) forward by the adjuster drive until it gets in contact with the at least one second cooperating friction means (e.g. brake disk);
- counting, by the motor encoder, the number of rotations of the electric motor of the adjuster drive needed for the at least one first cooperating friction means (e.g. brake pad) to get in contact with the at least one second cooperating friction means (e.g. brake disk);
- calculating the current wear of the at least one second cooperating friction means (e.g. brake disk) based on the result of said counting; and/or,
- if the second brake is used as an auxiliary brake, calculating the total wear of the second brake based on the result of said counting.

Preferably, in both above mentioned cases, the indication that the second brake is used as an auxiliary brake particularly shall mean that the second brake is used as anything other than a parking or fixing brake.

Accordingly, the brake pads are driven forward by the adjuster drive until they get in contact with the brake disk. During this process of making contact with the brake disk, it is possible to calculate the current wear of the brake disk, or the total wear if the second brake is used as an auxiliary brake, by counting the number of rotations of the adjuster drive, i.e. of the electric motor, by the motor encoder.

If, instead of the above mentioned electric motor, other, non-rotating adjuster drive means are used, other physical characteristics or dimensions are likewise conceivable instead of said rotations, e.g. a linear advancement or displacement, that are indicative for a measured distance, particularly the distance over which the brake pads are advanced or driven forward to get in contact with the brake disk. The same or similar applies to certain other types of electric motors which are likewise conceivable and which, instead of rotary movements, may e.g. provide linear, translational movements. Thus, other physical characteristics or dimensions may be relevant for such linear motors or other motors instead of the above discussed number of rotations of the electric motor which, thus, shall be understood to be meant just as examples.

From said point of contact between the brake pads and the brake disk the adjuster drive (electric motor) needs to turn back a certain number of rotations to realize the desired correct clearance between the brake pads and the brake disk. Accordingly, the method for clearance adjustment comprises the following step:
- setting the desired clearance between the at least one first cooperating friction means (e.g. brake pad) and the at least one second cooperating friction means (e.g. brake disk) by turning back the electric motor of the adjuster drive for a determined number of rotations from the point when the at least one first cooperating friction means (e.g. brake pad) gets in contact with the at least one second cooperating friction means (e.g. brake disk).

In a preferred embodiment of the method of the invention, the second brake particularly comprises one brake disk and two brake pads, wherein respectively one brake pad is located on each side of the brake disk. Therein, the above discussed clearance specifically is the sum of the clearance between the brake disk and the brake pad on one side of the brake disk plus the clearance between the brake disk and the brake pad on the other side of the brake disk.

In this embodiment, the clearance may be defined as the sum of the both gaps between the brake disk and the respective one of two brake pads on each side of the brake disk. This may be useful in the case of a so-called floating brake and/or in a case where it is not possible to adjust the clearance only on one side of the brake disk.

Furthermore, the invention also provides a device for wear compensation or adjustment in a braking system of vehicles, particularly commercial vehicles or utility vehicles, wherein the device uses a method for wear compensation as described above.

Furthermore, the invention also provides a vehicle, wherein the vehicle uses a method and/or a device for wear compensation in a braking system of the vehicle as described above. The vehicle of the invention can particularly be configured as a utility vehicle, a commercial vehicle, a truck, a trailer, a bus, a passenger car, and/or a combination of a towing vehicle and a trailer. Additionally or alternatively, the vehicle can be configured as an electric, hybrid, fuel cell, hydrogen or conventional combustion engine vehicle.

Further details and advantages of the invention will be explained in the following detailed description of various embodiments of the invention in combination with the attached drawings.

Fig. 1 shows a schematic cross-sectional view of a vehicle braking system according to a first embodiment of the invention;

Fig. 2 is a diagram of an adjustment behavior of wear adjustment means according to a first embodiment of the method of the invention;

Fig. 3 shows a schematic cross-sectional view of a part of a vehicle braking system according to another embodiment of the invention;

Fig. 4 is a diagram of an adjustment behavior of wear adjustment means according to another embodiment of the method of the invention.

Fig. 1 schematically shows a vehicle braking system having a first brake 10, e.g. a service brake having a regular service braking function during driving of the vehicle and/or a fixing brake function and/or auxiliary brake functions, particularly boost and/or emergency brake functions. The vehicle braking system further has a second brake 20 typically having a fixing brake function and/or auxiliary brake functions, particularly boost and/or emergency brake functions, to support the function of the first brake 10.

The first and second brakes 10, 20 are friction brakes having first and second cooperating friction means for effecting the actual brake clamping function. Here, the first brake 10 comprises brake pads 12, 14 which act on a brake disk 1, and the second brake 20 comprises brake pads 22, 24 which act on the same brake disk 1. Brake disk 1 is rotatable with the wheels about a rotation axis 2. In the embodiment shown in Fig. 1, each of the first and second brakes 10, 20 comprises one brake pad 12, 14 or 22, 24 each on each side of the brake disk 1. Brake pads 12, 14 of the first brake 10 are connected with each other by a brake caliper 16 which particularly functions to move the brake pads 12, 14 at both sides uniformly towards and away from the brake disk 1.

Likewise, brake pads 22, 24 of the second brake 20 are connected with each other by a brake caliper 26.

It is to be noted that other suitable arrangements and any other suitable number of said friction means may also be possible. Furthermore, other friction means for the brakes 10, 20 are likewise conceivable, such as for example one or more brake shoes which cooperate with at least one brake drum.

As further shown in Fig. 1, clearance adjustment means 30 are associated with the second brake 20. These clearance adjustment means 30 are provided and function to adjust or set an actual clearance C between the respective first and second cooperating friction means, i.e. between brake disk 1 and brake pads 22, 24, of the second brake 20 to a desired clearance value or target value for clearance C between the respective first and second cooperating friction means of the second brake 20. More specifically, clearance C respectively defines the free space or gap between brake disk 1 and brake pad 22 on one side of the brake disk 1, and/or between brake disk 1 and brake pad 24 on the other side of the brake disk 1.

Accordingly, in the embodiment shown in Fig. 1, the total clearance can be defined as the sum of the both gaps, i.e. the sum of the clearance C between the brake disk 1 and the brake pad 22 on one side of the brake disk 1 plus the clearance C between the brake disk 1 and the brake pad 24 on the other side of the brake disk 1. This may be useful in the case of a so-called floating brake and/or in a case where it is not possible to adjust the clearance C only on one side of the brake disk 1.

Furthermore, clearance C specifically defines the size or extension of said free space or gap in a basic or start or "Zero" position of the brake where the brake is not activated and not biased, i.e. where the respective brake pad has the largest distance away from the brake disk.

As was discussed above, the clearance adjustment means 30 are provided and function to adjust clearance C and set a constant clearance C or distance between said cooperating friction means of the concerned brake, particularly in said unbiased basic or start position of the brake, in order to compensate or offset any wear that has occurred on the cooperating friction means, e.g. due to material abrasion and/or corrosion due to an operation or non-operation of the brake. Thereby, the regularly intended clamping effect and/or braking performance and/or reaction/response times of the brake shall be maintained which otherwise may have deteriorated due to said wear.

While Fig. 1 shows clearance adjustment means 30 in combination with the second brake 20, corresponding or other clearance adjustment means can also be provided in connection with the first brake 10 for an adjustment of an actual clearance between the respective first and second cooperating friction means of the first brake 10. It is to be noted that the clearance adjustment means 30 of the second brake 20 typically are separate from and independent of any such clearance adjustment means of the first brake 10.

The clearance adjustment means 30 of the second brake 20 comprise a wear adjuster 32 which eventually acts on the concerned brake pad 22, 24 and displaces same, e.g. advances or retracts it, in relation to the brake disk 1. Thereby, any changed distances or clearances C between the brake pad 22, 24 and the brake disk 1, which are due to wear, are compensated. To accomplish the movement of the concerned brake pads 22, 24 over said distance, the wear adjuster 32 is driven by drive means which comprise at least one lever and/or at least one gear wheel (not shown in Fig. 1). Said drive means may operate pneumatically and/or electrically (i.e. fluidic, in particular pneumatical and/or electrical and/or electromechanical actuators may be preferred) and/or in any other suitable manner (i.e. other kinds of actuators may also be conceivable).

The wear adjuster 32 in turn drives advancement means such as, for example, one or more threaded tubes or shafts 34. The threaded tubes or shafts 34 eventually act on the one or more brake pads 22, 24 and displace them towards and/or away from the brake disk 1 (as schematically indicated in Fig. 1 by the double arrow above brake pad 22) such that, by turning the threaded tubes or shafts 34, wear of the brake pads 22, 24 and/or of the brake disk 1 can be compensated.

The rate and/or speed of an adjustment of the actual clearance C between the respective brake pad 22, 24 and the brake disk 1 substantially depends on the design or layout and geometry of the concerned involved elements, such as e.g. said wear adjuster 32 and/or said drive means (lever, gear wheel) and/or said advancement means (threaded tube or shaft 34). By modifying said designs and/or geometries, any transmission ratios between said involved elements can be changed to adapt, particularly to enhance or accelerate, a rate of the adjustment of the actual clearance C between the respective brake pad 22, 24 and the brake disk 1.

Therein, specifically, the transmission ratio between the lever and/or gear wheel of the drive means of the wear adjuster 32 and the wear adjuster 32 as such can be changed for example by modifying the ratio of fork lengths of the lever. In addition or alternatively, a thread pitch of the at least one threaded tube or shaft 34 may be modified, particularly enhanced.

As further shown in Fig. 1, a wear sensor or wear sensing system 36 is connected to the advancement means which eventually act on the one or more brake pads 22, 24, i.e. for example to the one or more threaded tubes or shafts 34. The wear sensor 36 particularly detects the sum of the wear of the brake pads 22, 24 and the brake disk 1. This detection of wear may particularly or additionally be made by determining the number of rotations of the threaded tubes or shafts 34 when turning the latter as explained above.

Accordingly, wear sensing can be accomplished by counting the number of turns of the threaded adjustment tubes. Therein, a small gear may reduce the turnings to under 360°, and a potentiometer in a C-shape may give back a certain voltage. Thereby, particularly, a measurement of the total wear of the brake disk plus one brake pad on each side of the brake disk is possible. In an alternative solution for wear sensing, wire loops may be provided at each brake pad back plate in a defined position. When the wear is too much, the wire loop will be severed and/or destroyed by the disk. The electrical signal is then interrupted. This kind of wear sensing may particularly be used to detect a limit of a brake pad wear. It is to be noted that other kinds and manners of wear sensing are also conceivable.

As mentioned above, a compensation or adjustment of wear and/or a too high clearance C at the brake pads 22, 24 and/or the brake disk 1 of the second brake 20 can be achieved by a repetitive actuation of the brake. If it is assumed that the clearance C is the highest prior to actuating the brake for the first time in a respective repetition cycle, then the clearance C decreases successively with every further brake actuation, thereby approaching the desired or target value of the clearance C, i.e. eventually reaching a constant value of the size of clearance C, where any further brake actuation then does no longer reduce the clearance C. Fig. 2 shows a diagram for such an adjustment behavior of the above discussed wear adjustment means.

Fig. 3 shows a schematic cross-sectional view of a part of another embodiment of the wear adjustment means of the vehicle braking system. Basically, the braking system of Fig. 3 comprises the same elements as the braking system shown in Fig. 1, namely first and second brakes 10, 20 comprising brake pads 12, 14 or 22, 24, respectively, which cooperate with brake disk 1. In Fig. 3, brake disk 1, which rotates about rotation axis 2, is only schematically shown with is lower half arranged below rotation axis 2. The braking system of Fig. 3 comprises clearance adjustment means 40 which again are provided and function to adjust or set an actual clearance C between the brake disk 1 and brake pads 22, 24 of the second brake 20 to a desired clearance value or target value for clearance C. The clearance adjustment means 40 of Fig. 3 may be used in combination with or alternatively to the clearance adjustment means 30 that are shown in Fig. 1.

The clearance adjustment means 40 for an adjustment of an actual clearance C between the brake pads 22, 24 of the second brake 20 and the brake disk 1 comprise an electric motor 42 and/or a motor encoder associated with the electric motor as an adjuster drive.

The adjuster drive (electric motor) 42 drives advancement means such as, for example, a shaft 44. Therein, a rotation of the electric motor 42 is transferred, possibly through additional suitable gears and/or other transmission means, to the shaft 44. Thus, by e.g. substantially using gear wheels, a rotational movement may be introduced to shaft 44, i.e. shaft 44 is made to rotate itself. Alternatively or additionally, by e.g. substantially using a rack-and-pinion drive, a translatory or linear movement may be introduced to shaft 44, i.e. shaft 44 as such is made to be displaced substantially linearly. Thus, the shaft 44 acts on the one or more brake pads 22, 24 and displaces them towards and/or away from the brake disk 1, i.e. the position of the brake pads 22, 24 relative to the brake disk 1 can thereby be changed and adjusted (as schematically indicated in Fig. 3 by the double arrow above brake pad 22).

Therein, the number of rotations of the electric motor 42 is substantially utilized and transformed into a magnitude of a length of a linear movement of the brake pads 22, 24 towards or away from the brake disk 1, which magnitude of length is indicative for an amount of adjustment or adaptation of the actual clearance C to the desired or target clearance C. Thus, by linearly and/or rotationally moving the shaft 44, wear of the brake pads 22, 24 and/or of the brake disk 1 can be compensated.

Therein, besides adjusting the actual clearance C between the brake pads 22, 24 and the brake disk 1, the adjuster drive (electric motor) 42 can also be used as a wear sensing system or wear sensor to detect the current wear of the brake pads 22, 24 and/or the brake disk 1. To this end, for example, the brake pads 22, 24 are driven forward by the adjuster drive (electric motor) 42 and the shaft 44, as explained above, until they get in contact with the brake disk 1. At the moment when the brake pads 22, 24 contact the brake disk 1, the rotational resistance in the electric motor 42 rises as the brake pads 22, 24 cannot move any further as they are stopped by the brake disk 1. The rise of the rotational resistance in the electric motor 42 causes an increased consumption of electric power or current in the motor 42.

Accordingly, a motor encoder of the electric motor 42 counts the number of rotations of the electric motor 42 which are needed for the concerned brake pad 22, 24 to get in contact with the brake disk 1. Based on the result of this counting, the current wear of the brake pads 22, 24 and/or of the brake disk 1 and/or the total wear of the braking system can be calculated. The desired clearance or target clearance C between the brake pads 22, 24 and the brake disk 1 can then be adjusted or set by turning back the adjuster drive (electric motor) 42 for a defined or determined number of rotations from the point when the concerned brake pad 22, 24 gets in contact with the brake disk 1. As explained above, this point is detected or sensed by the electric motor 42 by the rise of the rotational resistance and the related increased consumption of electric power in the electric motor 42. In this manner, the adjuster drive (electric motor) 42 can operate as a wear sensor.

Using the adjuster drive or electric motor 42 as a wear sensor, as explained above, is particularly useful in case that no other wear sensing system is provided in the first brake 10 and/or the second brake 20. In this case, clearance adjustments (particularly so-called slack adjustments) will only be done in predefined time intervals, by a predefined number of actuations of the first brake 10 and/or by predefined actuation strengths of the first brake 10. Fig. 4 shows a so-called slack adjustment behavior with an adjuster drive and without a wear sensing system, wherein particularly clearance adjustments are made in predefined time intervals.

Fig. 4 particularly shows the clearance over time in a released brake position and while an adjustment is being made. The brake actuations which occur during the main time and which create a higher clearance are not shown. How fast the clearance increases depends on the brake behavior (e.g. number, duration, strength of brake actuations). The second filled-in field/area in the diagram of Fig. 4 shows a clearance after many or long brake events with less strength. Here, the slope of the graph is low. The right-hand side filled-in field/area shows a clearance after less or short brake events with high strength. Here, the slope of the graph is steeper. By knowing the number, duration and strength of the brake events of the first brake, the need of adjustment can be estimated and the adjustment process can be started.

It is to be noted that the diagram of Fig. 4 shows a more theoretical situation. In real practice, the slope of the graphs typically will not be that even as it is shown in Fig. 4.

### LIST OF REFERENCE SIGNS

- 1: brake disk
- 2: rotation axis
- 10: first brake
- 12: brake pad
- 14: brake pad
- 16: brake caliper
- 20: second brake
- 22: brake pad
- 24: brake pad
- 26: brake caliper
- 30: clearance adjustment means
- 32: wear adjuster
- 34: advancement means, threaded tube or shaft
- 36: wear sensor
- 40: clearance adjustment means
- 42: adjuster drive, electric motor
- 44: advancement means, shaft
- C: clearance

## Claims

1. Method for wear compensation in a braking system of vehicles, particularly commercial vehicles or utility vehicles,
wherein the braking system comprises
- a first brake (10) having a service braking function during driving of the vehicle and/or a fixing brake function and/or auxiliary brake functions, particularly boost and/or emergency brake functions;
- a second brake (20) having a fixing brake function and/or auxiliary brake functions, particularly boost and/or emergency brake functions, to support the function of the first brake;
- the first brake (10) and/or the second brake (20) each having first and second cooperating means (1; 12, 14; 22, 24) for effecting the brake function, said first and second cooperating means (1; 12, 14; 22, 24) particularly comprising cooperating friction means;
the method being **characterized by** the following steps:
- providing adjustment means (30; 40) for an adjustment of an actual clearance (C) between the respective first and second cooperating means (1; 22, 24) of the second brake (20);
- providing a value for a desired clearance (C) between the respective first and second cooperating means (1; 22, 24) of the second brake (20); and
- adjusting an actual clearance (C) between the respective first and second cooperating means (1; 22, 24) of the second brake (20) to said desired clearance value by said adjustment means (30; 40).

2. Method according to claim 1, comprising the following steps:
- applying the first brake (10) to hold the vehicle in standstill;
- actuating and releasing the second brake (20) one or several times to compensate wear at the first and/or second cooperating means (1; 22, 24) of the second brake (20);
- actuating the second brake (20) to hold the vehicle stationary;
- releasing the first brake (10).

3. Method according to claim 1 or 2,
wherein the adjustment means (30; 40) for an adjustment of an actual clearance (C) between the respective first and second cooperating means (1; 22, 24) of the second brake (20) comprises
- advancement means (34; 44);
- at least one wear adjuster (32; 42); and
- drive means;
wherein the method comprises the following steps:
- cooperating of the advancement means (34; 44) with the first and/or second cooperating means (1; 22, 24) of the second brake (20), wherein wear at the first and/or second cooperating means (1; 22, 24) can be compensated by advancing and/or retracting said advancement means (34; 44);
- driving the advancement means (34; 44) by the at least one wear adjuster (32; 42); and
- driving the at least one wear adjuster (32; 42) by the drive means.

4. Method according to claim 3, comprising the following steps:
- providing the drive means such that it comprises at least one lever, wherein the lever comprises engagement elements,
- driving the at least one wear adjuster (32), wherein the wear adjuster (32) comprises engagement elements,
- wherein an adjustment of an actual clearance (C) between the respective first and second cooperating means (1; 22, 24) of the second brake (20) occurs when said engagement elements of the wear adjuster (32) contact said engagement elements of the lever.

5. Method according to claim 4, comprising the following step:
- providing the advancement means such that it comprises at least one threaded tube or shaft (34), wherein the at least one threaded tube or shaft (34) comprises a thread pitch.

6. Method according to any one of claims 1 to 5, comprising the following step:
- providing the adjustment means (40) for an adjustment of an actual clearance (C) between the respective first and second cooperating means (1; 22, 24) of the second brake (20) such that it comprises an electric motor (42) and/or a motor encoder associated with the electric motor as an adjuster drive.

7. Method according to any one of claims 1 to 6, comprising the following steps:
- providing a wear sensing system in the first brake (10) to detect the amount of wear of the first and/or second cooperating means (1; 12, 14) for effecting the brake function of the first brake (10); and/or
- providing a wear sensing system in the second brake (20) to detect the amount of wear of the first and/or second cooperating means (1; 22, 24) for effecting the brake function of the second brake (20);
- based on the information obtained from the wear sensing system in the second brake (20) and/or the wear sensing system in the first brake (10), determining the point in time and the amount of wear of the second brake (20) which needs to be compensated by the clearance adjustment means (30; 40) of the second brake (20).

8. Method according to claim 7,
wherein the first and second cooperating means for effecting the brake function of the first brake (10) and/or the second brake (20) comprise at least one, particularly two, first cooperating friction means (12, 14; 22, 24) and at least one second cooperating friction means (1), and wherein the second brake (20) has only a fixing brake function; wherein the method comprises the following steps:
- measuring substantially the total wear of the braking system, particularly the sum of the wear of the at least one, particularly two, first cooperating friction means (12, 14) plus the wear of the at least one second cooperating friction means (1) of the first brake (10), by the wear sensing system of the first brake (10); and/or
- measuring the wear of the second cooperating friction means (1) of the second brake (20) by the wear sensing system of the second brake (20); and/or
- calculating the total wear of the at least one, particularly two, first cooperating friction means (12, 14) of the first brake (10), based on the measuring of the wear of the second cooperating friction means (1) of the second brake (20) and on the measuring of the total wear by the wear sensing system of the first brake (10).

9. Method according to any one of claims 1 to 6, comprising the following steps:
- providing a wear sensing system in the first brake (10) to detect the amount of wear of the first and/or second cooperating friction means (1; 12, 14) for effecting the brake function of the first brake (10);
- based on the information obtained from the wear sensing system in the first brake (10), and/or based on determining that the total wear, particularly the sum of the wear of the first cooperating friction means (12, 14; 22, 24) plus the wear of the second cooperating friction means (1), is approximately proportional to the wear of the second cooperating friction means (1), determining the amount of wear of the second brake (20) which needs to be compensated by the clearance adjustment means (30) of the second brake (20).

10. Method according to any one of the preceding claims, wherein the relationship between the wear of the first cooperating friction means (12, 14; 22, 24) and the wear of the second cooperating friction means (1) substantially depends on the friction materials used on the first and/or the second cooperating friction means (1; 12, 14; 22, 24) and/or on the type of the vehicle.

11. Method according to any one of claims 1 to 6, comprising the following step:
- adjusting an actual clearance (C) between the respective first and second cooperating means (1; 22, 24) of the second brake (20) to the desired clearance value in predefined time intervals and/or by a predefined number of actuations of the first brake (10) and/or by predefined strengths of actuations of the first brake (10) and/or by a predefined duration of actuations of the first brake (10).

12. Method according to claim 11 in dependency on claim 6,
wherein the first and second cooperating means for effecting the brake function of the second brake (20) comprise at least one first cooperating friction means (22, 24) and at least one second cooperating friction means (1);
wherein the method comprises the following steps:
- adjusting the actual clearance (C) between the at least one first cooperating friction means (22, 24) and the at least one second cooperating friction means (1) of the second brake (20) by the adjuster drive (42);
- using the adjuster drive (42) as a wear sensing system to detect the current wear of the at least one second cooperating friction means (1); and/or,
- if the second brake (20) is used as an auxiliary brake, using the adjuster drive (42) as a wear sensing system to detect the total wear of the second brake.

13. Method according to claim 12, comprising the following steps:
- driving the at least one first cooperating friction means (22, 24) forward by the adjuster drive (42) until it gets in contact with the at least one second cooperating friction means (1);
- counting, by the motor encoder, the number of rotations of the electric motor (42) of the adjuster drive needed for the at least one first cooperating friction means (22, 24) to get in contact with the at least one second cooperating friction means (1);
- calculating the current wear of the at least one second cooperating friction means (1) based on the result of said counting; and/or,
- if the second brake (20) is used as an auxiliary brake, calculating the total wear of the second brake based on the result of said counting.

14. Method according to claim 13, comprising the following step:
- setting the desired clearance (C) between the at least one first cooperating friction means (22, 24) and the at least one second cooperating friction means (1) by turning back the electric motor (42) of the adjuster drive for a determined number of rotations from the point when the at least one first cooperating friction means (22, 24) gets in contact with the at least one second cooperating friction means (1).

15. Method according to any one of claims 1 to 14, wherein the first cooperating friction means comprises at least one brake pad (12, 14; 22, 24) and/or at least one brake shoe, and wherein the second cooperating friction means comprises at least one brake disk (1) and/or at least one brake drum.

16. Method according to claim 15, wherein the second brake (20) comprises one brake disk (1) and two brake pads (22, 24), wherein respectively one brake pad (22, 24) is located on each side of the brake disk (1), and wherein clearance (C) is the sum of the clearance between the brake disk (1) and the brake pad (22) on one side of the brake disk (1) plus the clearance between the brake disk (1) and the brake pad (24) on the other side of the brake disk (1).

17. Device for wear compensation in a braking system of vehicles, particularly commercial vehicles or utility vehicles, **characterized in that** the device uses a method for wear compensation according to any one of the preceding claims.

18. Vehicle, particularly commercial vehicle or utility vehicle, **characterized in that** the vehicle uses a method for wear compensation in a braking system of the vehicle according to any one of claims 1 to 16 or a device for wear compensation in a braking system of the vehicle according to claim 17.
